Europäisches Patentamt

(19) European Patent Office

Office européen des brevets

(11) Publication number : **0 532 128 A1**

# EUROPEAN PATENT APPLICATION

(21) Application number : 92202971.5

(22) Date of filing : 14.08.92

(51) Int. Cl.$^5$: **C09K 7/06,** C09K 7/02, C07C 29/16

(30) Priority : 16.08.91 EP 91307573

(43) Date of publication of application :
17.03.93 Bulletin 93/11

(84) Designated Contracting States :
AT BE CH DE DK ES FR GB GR IT LI LU MC NL PT SE

(71) Applicant : EXXON CHEMICAL PATENTS INC.
200 Park Avenue
Florham Park New Jersey 07932 (US)

(72) Inventor : Godwin, Allen David
335 Bukit Timah Road
No. 07-03 Wing on Life, 1025 (SG)
Inventor : Sollie, Tor
Langsetervn 3
N-0495 Oslo (NO)

(74) Representative : Bawden, Peter Charles
EXXON CHEMICAL LIMITED EXXON CHEMICAL TECHNOLOGY CENTRE PO Box 1 Abingdon Oxfordshire OX13 6BB (GB)

(54) Load bearing fluid.

(57) Ethers with branched chain aliphatic radicals having from 8 to 10 carbon atoms, especially branched di-decyl ethers, are useful as the oil phase in drilling muds. The ethers are obtainable as a product of hydro-formylating an olefin feedstock and subsequent treatment.

EP 0 532 128 A1

This invention relates to load bearing and friction-reducing fluids, more especially to such fluids for use in well drilling and in metal working lubrication.

Drilling of oil or gas wells normally involves the circulation of a fluid through the drill string and out through nozzles in the drill bit, the fluid being returned through the annular passage formed between the drill string and the bore. The fluid cools and lubricates the drill, provides a hydrostatic head to counterbalance pressures, and removes the cuttings from the drill bit. Such fluids are also employed in other areas, for example, geothermal drilling, drilling for water and scientific drilling.

Oil-containing drilling emulsions have been used for many years for these purposes. The emulsion may be in the form of a water-in-oil or an oil-in-water emulsion, in each case normally having finely divided solids suspended therein, and containing a variety of additives for various purposes, e.g., emulsifiers, surfactants, pH control agents, biocides, corrosion inhibitors, weight and viscosity regulators, oxygen and sulphur scavengers, and fluid-loss additives.

The oil traditionally used was a hydrocarbon oil, often with an aromatic content; concern for the environment has-recently required hydrocarbon oils used for the purpose to be largely aliphatic and more recently, because aliphatic hydrocarbons are not readily biodegradable, hydrocarbons are being increasingly restricted in their use. Many replacements for hydrocarbons have been suggested; these have primarily been aliphatic materials with functional groups that facilitate biodegradation, for example, ester groups. Esters are, however, likely to be saponified in use, causing problems with odour, viscosity increase, wax build up, and poor separation of cuttings from the fluid.

The modern technological and ecological demands on the oil phase components of drilling fluids now make it necessary for the following requirements to be borne in mind. The material should be hydrophobic and of low polarity (to minimize swelling of clays and shales). It should have as high as possible a flash point, advantageously above 100°C. Its viscosity at 20°C should be at most 20 cSt ($20.10^{-6}$ m$^2$/s), advantageously from 1 to 12 cSt, and it should have a pour point below -15°C, to be pumpable between -5°C and -10°C. It should be a poor solvent for $CO_2$ and $H_2S$. It should remain physically and chemically stable at temperatures up to 250°C, pressures up to 8000 p.s.i. (about 55 MPa) and high pH (up to 10 lb of lime per barrel, about 30 kg of lime per m$^3$) while being biodegradable under both aerobic and anaerobic conditions. The material and its degradation products should have low toxicity both to mammals and to marine flora and fauna, and little odour. All these requirements must be met without detracting from the prime purpose of the material, to provide the best possible lubricity.

In EP-A-391251, it is proposed to employ water-insoluble ethers as components in water-in-oil drilling fluids, the ethers being derived from monohydric alcohols having at least 4, and preferably at least 6, carbon atoms, symmetrical ethers with 6, 7, and at least 8 carbon-atoms in each alcohol-based moiety being preferred. The alcohols are said to advantageously aliphatic, straight or branched chain, and may be unsaturated.

Examples of ethers given are di-n-octyl ether, di($C_8$) and ($C_{10}$) ethers of unspecified configuration, and di-isotridecyl ether.

In EP-A-399270, a similar range of ethers is disclosed for use in oil-in-water drilling fluids, the examples given being-di-n-decyl and di-iso-tridecyl ethers.

All of the identifiable ethers mentioned above have, however, disadvantages in use in drilling fluids. Di-n-octyl ether has a pour point of -6°C, and di-n-decyl ether has a pour point of +18°C, and are pumpable only with difficulty or not pumpable at all at temperatures commonly encountered in practice. Although diisotridecyl ether has a pour point below -42°C, its viscosity is very high (23.73 cSt or 23.73 x 10$^6$ m$^2$/s at 20°C), rendering it incapable of providing the rheological properties required of the drilling fluid.

There accordingly remains a need for a drilling fluid having improved technical properties while meeting the ecological demands presently being made or likely to be made in the near future.

In the first aspect, the present invention provides the use in a load bearing composition, especially a drilling fluid, of at least one aliphatic ether the ether oxygen atom of which is linked to at least one branched chain alkyl or alkenyl radical having from 8 to 10 carbon atoms (hereinafter an ether of the formula I). Advantageously, the or each ether is of the formula II

$$R^1\text{-O-}R^2$$

wherein-$R^1$ is a branched chain alkyl or alkenyl radical having from 8 to 10 carbon atoms, and $R^2$ is a branched chain alkyl or alkenyl radical having from 7 to 12 carbon atoms. Advantageously, $R^2$ is a branched chain alkyl or alkenyl radical, having from 8 to 10 carbon atoms. Advantageously, $R^1$ and preferably $R^2$ contain 9 or 10 carbon atoms. Preferably, $R^1$ and $R^2$ are both branched chain alkyl radicals having 10 carbon atoms.

Mixed ethers, for example $C_9\text{-O-}C_{10}$, and ethers in which the two aliphatic radicals are branched in different ways, may be used, as may mixtures of ethers, whether symmetrical or unsymmetrical. Mixtures of isomeric ethers are preferred.

More especially, the invention provides the use in a load bearing composition, especially a drilling fluid, of a mixture of di-decyl ethers, at least a major proportion of the di-decyl radicals being branched chain, and advantageously at least 85%, preferably 90%, and most preferably all, are branched chain. Advantageously, the carbon atom linked to the ether oxygen is unsubstituted in substantially all, i.e., at least 95%, of the radicals. Advantageously, also, the a-carbon atom is substituted in at least 15% of radicals. Advantageously, a major proportion, preferably at least 70%, of the radicals are dimethyl octyl radicals, for example, the radicals are 3,4-, 3,5-, 3,6-, 3,7-, 4,5-, 4,6- and 4,7-dimethyloctyl radicals. Advantageously from 40 to 60% of the radicals are branched at the C-3 atom.

The ether, or mixture of ethers, used in accordance with this first aspect of the invention advantageously has a pour point as determined by ASTM D97 below -15°C, preferably below -20°C and more preferably below -30°C. The ether, or mixture of ethers, advantageously has a viscosity, as determined by ASTM D445 at 20°C, of at most 20 cSt, preferably from 2 to 10, most preferably 3 to 8, cst (m$^2$/s. $10^6$).

The invention also provides a drilling fluid comprising an emulsion comprising at least one ether of the formula I as defined above, water, at least one member selected from surfactants and emulsifiers, and at least one member selected from clay, a halide of an alkaline earth or alkali metal, and weighting material.

The emulsion may be an oil-in-water emulsion or, preferably, a water-in-oil emulsion. The working material of the oil phase consists essentially of an ether of the formula I, or may comprise the ether together with other oils. Advantageously, the ether of the formula I constitutes at least 40%, preferably at least 60%, by weight, of the oil phase, other components including those conventionally used, for example, the esters of natural or synthetic saturated or unsaturated fatty acids with mono- or poly-functional alcohols, ethers other than those of the formula I, optionally alkoxylated amines, ether alcohols, ether acids, ether esters, ether amines, and mineral oils (although these are not preferred for the reasons given above).

The ethers used according to the invention may be made by any convenient method, many of which are in commercial use or are known from the literature, for example by the Williamson synthesis (e.g., the reaction of an appropriate alkoxide and alkyl halide), the addition of an appropriate alcohol to alkene, or, advantageously, by the catalytic dehydration of an appropriate alcohol using alumina, sulphuric acid or, advantageously, a sulphonic acid. A preferred method of obtaining an ether by catalytic dehydration is described in our co-pending European Application No. (Case No. 91PINT004), the disclosure of which is incorporated by reference herein.

Alternatively, the ether may be formed by hydroformylating a C$_7$ to C$_9$ branched aliphatic olefin feedstock, hydrogenating the resulting aldehyde, distilling the product and recovering the distillation residue, which contains, <u>inter alia</u>, the desired ether. (The low boiling distillate from this distillation contains C$_8$ to C$_{10}$ branched aliphatic alcohols which are suitable for use as starting materials for the methods of manufacturing ethers mentioned in the preceding paragraph.) The content of the desired ether in the residue may if desired be enhanced by the procedure described in EP-A-185477, the disclosure of which is incorporated by reference herein, which procedure includes optionally cracking the distillation residue and optionally hydrogenating the optionally cracked residue, and further distilling the optionally hydrogenated optionally cracked residue and recovering the residue remaining after removal of light alcohols. The ether concentration may be still further increased by further distilling the light alcohol-depleted residue and recovering the low boiling, ether-containing, fraction.

Accordingly, in a second aspect, the invention provides the use in a load bearing composition, especially in a drilling fluid, of an aliphatic ether-comprising product obtainable, and advantageously obtained, by hydroformylating an aliphatic C$_7$ to C$_9$ olefin feedstock, hydrogenating the resulting aldehyde, distilling the resulting product and recovering the distillation residue.

Advantageously, the invention provides the use of the residue of further distillation of the residue, which residue has optionally been cracked and optionally hydrogenated, such residue forming an ether-enhanced, light alcohol-depleted, product. Preferably there is provided the use of the product obtainable, and advantageously obtained, by distilling the light alcohol-depleted product and recovering therefrom the low boiling, ether-containing fraction, optionally further distilling that fraction and recovering the middle distillate therefrom.

Advantageously, the hydroformylation is carried out on an olefin feedstock and under conditions appropriate to obtain ethers described above in accordance with the first embodiment of the invention, that is, ethers of the formula I, and preferably ethers of the formula II, it being understood that in accordance with the second embodiment of the invention the ethers will generally be a mixture of ethers of such formulae, generally in admixture with ethers other than of formulae I or II, and generally in admixture with other products of hydroformylation and hydrogenation.

In the product, the proportion of ethers of the formula I is advantageously from 25 to 90%, preferably from 60 to 90%, with ether alcohols, alcohols, and aldehydes representing up to 40%, esters up to 15%, and other functional aliphatic molecules up to 15%, by weight.

The ethers contained in the product of hydroformylation and subsequent treatment will normally be a mixture of different ethers of the formula I, and preferably of the formula II, possibly in admixture with ethers of other than such formulae.

The invention further provides a drilling fluid comprising an emulsion having an aqueous phase and an oil phase, in which the oil phase comprises the aliphatic ether-comprising product obtainable, and advantageously obtained, by the hydroformylation and distillation procedures defined above.

The drilling fluid advantageously also comprises at least one member selected from emulsifiers and surfactants, and at least one member selected from clays, a halide of an alkaline earth or alkali metal, and weighting material.

The emulsion may be an oil-in-water emulsion or, preferably, a water-in-oil emulsion. The working material of the oil phase may consist essentially of the ether-comprising hydroformylation product or may comprise the product together with other oils.

When the drilling fluid according to either the first or the second aspect of the invention is an oil-in-water emulsion, the oil phase advantageously represents from 5 to 65%, preferably from 5 to 50%, more preferably from 5 to 30%, and most preferably from 5 to 10%, by weight, based on the total weight of oil phase and unweighted aqueous phase.

When the drilling fluid is a water-in-oil emulsion, the oil phase advantageously represents from 55 to 95%, preferably from 75 to 95%, and most preferably from 75 to 90%, based on the total weight of oil phase and unweighted aqueous phase.

As indicated above, the drilling fluid advantageously comprises surfactants and/or emulsifiers, groups which to some extent overlap.

As surfactants there may be mentioned, for example, a non-ionic surfactant, for example, polyalkylene ether derivatives of alcohols and alkyl phenols, advantageously having from 3 to 30 alkylene, preferably ethylene, oxy groups and from 8 to 20 carbon atoms in the hydrocarbon chain. Preferably, there are used polyethylene oxy derivatives with from 5 to 20, more preferably from 5 to 15, repeat units with a linear or branched primary alcohol from 8 to 18, more preferably from 10 to 16, carbon atoms in the chain or with an alkyl phenol with a linear or branched alkyl group with from 6 to 14 carbon atoms. Most preferably there is used an ethoxylated fatty alcohol having from 5 to 20, advantageously 7 to 10, ethoxy groups and 11 carbon atoms in the chain which may be linear or branched.

The surfactant may alternatively be a cationic surfactant, for example an imidazoline derivative, for example a fatty imidazoline salt of a strong monoprotic acid, for example one as described in U.S. Patent No. 3585051, or a quaternary ammonium salt having at least one long chain alkyl or alkenyl substituent, e.g., one having from 8 to 20 carbon atoms, the remaining substituents being alkyl groups with up to 4 carbon atoms, especially methyl, the anion being, for example chloride, bromide, iodide, phosphate, sulfamate, or acetate.

As emulsifier there may be mentioned fatty amine alkoxylates, aromatic alkoxylates or an ether amine alkoxylate. Advantageously, however, the emulsifier is a quaternary ammonium salt, e.g., a long chain alkyl trimethyl or dialkyl dimethyl ammonium chloride, and preferably the quaternized reaction product of an oxyalkylated polyamine with a fatty acid, for example the product of reaction of a soya or coco fatty acid, or a blend of the two, with diethylene triamine, ethoxylation, and subsequent quaternization with methyl chloride.

The drilling fluids of the invention may also contain a viscosity regulator, e.g., clay, for example, bentonite, which may be treated, e.g., with peptizing agents or with organic salts, to render them organophilic. Suitable proportions are, for example, up to 30%, preferably from 5 to 20%, by weight, based on the weight of unweighted aqueous phase and oil phase.

The drilling fluids may also contain weighting agents, for example, barium sulphate, to increase the specific gravity of the fluid, e.g., up to 2.5, and more advantageously up to 1.6.

The drilling fluids may also contain, in the aqueous phase, a soluble alkali or alkaline earth.metal salt, especially calcium or potassium chloride, in an amount up to that needed to saturate the aqueous phase.

The drilling fluids may also contain a fluid-loss additive, for example a hydrophobic lignite, to assist in developing a liquid-impervious film on the bore wall. Suitable proportions are, for example, up to 7% by weight, based on the weight of the oil phase.

The following Examples illustrate the invention:

Example 1

A commercial mixture of branched nonenes was hydroformylated, hydrogenated, and distilled. The heavy fraction, or bottoms product, was subjected to steam cracking, hydrogenation and further distillation, the bottoms product being recovered as an ether rich composition, containing about 60% mixed branched $C_{20}$ ethers and about 23% ether-alcohols, by weight. Further fractionation yielded a mixed $C_{20}$ ether of final boiling point of 325°C, and a pour point below -45°C.

Example 2

The procedure of Example 1 was repeated using a mixture of branched octenes as starting material. A mixed $C_{18}$ ether of final boiling point 312°C and a pour point below -45°C was produced.

Example 3

1462 g of iso-decyl alcohol (mixture of isomers, obtained from a hydroformylated and hydrogenated $C_9$ olefin feedstock) and 37.5 g of methane sulphonic acid (2.56% by weight on alcohol) were charged under nitrogen into a reactor equipped with a Dean-Stark trap and condenser, and heated with stirring for 30 minutes until a temperature of 220°C was reached. The reaction mixture was maintained at that temperature for 5 hours 20 minutes, the water formed being removed.

After cooling the reaction mixture to 70°C, 79 g of a 30% by weight methanolic solution of sodium methoxide were added and the temperature maintained at 65°C for 2 hours 30 minutes. The product was washed twice, each time with 280 g of water at 65°C for 30 minutes, to remove sodium methane sulphonate and methane sulphonic acid, and then stripped at 160°C to 200°C, 100 to 50 mm Hg ($\approx$13 to 6.3 kPa), to remove decenes, unreacted alcohol and esters.

The product had a viscosity of 8.73 cSt (8.73 x $10^{-6}$ m²/s) at 20°C, a density of 0.8273, and a pour point below -42°C.

Example 4

The procedure of Example 3 was followed, using isooctyl alcohol as starting material, and etherifying at 165 to 185°C. Viscosity, 20°C, 4.20 cSt; density 0.8146, pour point below -42°C.

The products of Examples 1 to 4 meet the viscosity, pour point, and ecotoxicity requirements for use as the oil phase in drilling fluids.

**Claims**

1. The use in a load bearing composition, for example in a drilling fluid, of at least one aliphatic ether the ether oxygen atom of which is linked to at least one branched chain alkyl or alkenyl radical having from 8 to 10 carbon atoms.

2. The use as claimed in claim 1, which comprises the use of at least one ether of the formula:
$$R^1 - O - R^2 \quad \text{(II)}$$
wherein $R^1$ represents a branched chain alkyl or alkenyl radical having from 8 to 10 carbon atoms, and $R^2$ is a branched chain alkyl or alkenyl radical having from 7 to 12 carbon atoms, advantageously from 8 to 10 carbon atoms, the number of carbon atoms in $R^1$ and $R^2$ being the same or different and if they are the same the branch structure of $R^1$ and $R^2$ being the same or different.

3. The use as claimed in claim 2, wherein $R^1$ and $R^2$ each represent branched chain alkyl radicals having 10 carbon atoms, there being advantageously used a mixture of such branched di-decyl ethers, preferably a major proportion of the alkyl radicals being dimethyl octyl radicals.

4. The use in a load bearing composition, for example in a drilling fluid, of an aliphatic ether-comprising product obtainable by hydroformylating an aliphatic $C_7$ to $C_9$ olefin feedstock, hydrogenating the resulting aldehyde, distilling the resulting product and recovering the distillation residue.

5. The use as claimed in claim 4, wherein there is used the residual product obtainable by further distilling the distillation residue, said further distilling optionally being carried out on the residue after its having been cracked and/or hydrogenated, such residual product being ether-enhanced.

6. The use as claimed in claim 5, wherein there is used an ether-containing product obtainable by distilling the ether-enhanced product and, recovering therefrom the low-boiling fraction, optionally further distilling that fraction and recovering the middle distillate therefrom.

7. A drilling fluid containing an ether as specified in any one of claims 1 to 3 or a product as specified in any one of claims 4 to 6, water, and optionally at least one material selected from surfactants and emulsifiers and at least one material selected from (a) clay, (b) a halide of an alkaline earth or of an alkali metal, and (c) weighting material.

8. A fluid as claimed in claim 7, which is an oil-in-water emulsion, the oil phase advantageously representing from 5 to 65%, preferably 5 to 50%, by weight, based on the total weight of oil and unweighted aqueous phase.

9. A fluid as claimed in claim 7, which is a water-in-oil emulsion, the oil phase advantageously representing from 55 to 95%, preferably 75 to 90%, by weight, based on the total weight of oil phase and unweighted aqueous phase.

10. A fluid as claimed in any one of claims 7 to 9, wherein the ether specified in any one of claims 1 to 3 represents at least 40%, advantageously at least 60%, by weight of the oil phase, and preferably the oil phase consists essentially of the specified ether.

European Patent
Office

**EUROPEAN SEARCH REPORT**

Application Number

EP 92 20 2971

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 399 270 (HENKEL)<br>* page 5, line 15 - line 36 *<br>* page 6, line 24 - line 45 *<br>--- | 1-3,7-10 | C09K7/06<br>C09K7/02<br>C07C29/16 |
| D,Y | EP-A-0 391 251 (HENKEL)<br>* page 4, line 28 - line 32 *<br>* page 5, line 45 - page 6, line 26; examples 1-5 *<br>--- | 1-3,7-10 | |
| Y | US-A-2 844 534 (D.L.COTTLE)<br>* column 1, line 15 - line 29 * | 1-3 | |
| A | * column 2, line 30 - line 44 * | 4-6 | |
| | ----- | | |
| | | | TECHNICAL FIELDS SEARCHED (Int. Cl.5)<br><br>C09K |

The present search report has been drawn up for all claims

| Place of search | Date of completion of the search | Examiner |
|---|---|---|
| THE HAGUE | 18 DECEMBER 1992 | BOULON A.F.J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)